# DEMANDE DE BREVET EUROPEEN

(11) **EP 1 462 425 A1**
(43) Date de publication de la demande: **29.09.2004**
(21) Numéro de dépôt: 04300059.5
(22) Date de dépôt: 03.02.2004
(51) Int. Cl.: C04B 28/08

(54) **Coulis de ciment à base d'eau chargée en sels**

(30) Priorité: 04.02.2003 FR 0301238
(71) Demandeur: COMPAGNIE DU SOL, 92000 Nanterre (FR)
(72) Inventeur: Vattement, Hubert c/o Compagnie du Sol, 92000 Nanterre (FR)
(74) Mandataire: Nevant, Marc

(57) **Abrégé**

L'invention concerne un coulis stable, notamment pour la réalisation de parois d'étanchéité, qui est constitué de ciment, d'eau chargée en sels, de bentonite, et de silicate de sodium.

## Description

La présente invention concerne un coulis de ciment à base d'eau chargée en sels.

L'invention trouve application dans le domaine de la construction, notamment pour la réalisation de parois ou coupures étanches.

On sait concevoir des coulis dilués, stables, pour réaliser une coupure étanche à partir d'eau douce. Ces coulis sont constitués par un mélange d'eau douce, d'argile modifiée de type bentonite et de ciment, et éventuellement d'adjuvants. La stabilité du coulis est importante, car elle est nécessaire pour assurer l'homogénéité du coulis dans la paroi. Les bentonites utilisées pour réaliser des coulis bentonite ciment sont toujours des bentonites sodiques. Ce sont les seules qui possèdent des propriétés colloïdales suffisantes pour maintenir en suspension des grains de ciment et stabiliser ainsi le coulis. Ces bentonites peuvent être naturellement sodiques ou calciques. Les bentonites calciques sont celles qui sont le plus fréquemment présentes dans la nature, elles nécessitent un traitement pour les transformer en bentonite sodique. C'est ce qui est communément appelé la permutation. La permutation peut être dans le sens calcique vers sodique mais également dans le sens inverse.

Toutefois, lorsque l'on utilise une bentonite sodique (naturelle ou permutée) en présence de solutions contenant du calcium dissous (eau de mer, eaux saumâtres, et plus généralement eaux chargées en sels), la bentonite perd ses propriétés du fait qu'elle redevient calcique.

On peut imaginer utiliser des argiles naturelles de type attapulgite à forts dosages mais ce système présente deux inconvénients majeurs, à savoir :
- une augmentation rapide de la rigidité causée par la forte absorption d'eau de l'argile, et
- une disproportion entre la quantité de ciment et celle d'argile qui dans la majorité des cas perturbe les caractéristiques du coulis.

Par ailleurs, l'utilisation de polymères est impossible car ils inhibent totalement la prise du coulis.

La fabrication de coulis stables en présence d'eaux chargées en sels s'avère donc extrêmement difficile à réaliser.

Il a maintenant été découvert, et c'est le fondement de l'invention, que l'utilisation conjointe de bentonite et de silicate de sodium, permet de stabiliser les coulis de ciment à base d'eau chargée en sels.

Ainsi, selon un premier aspect, l'invention concerne un coulis stable constitué de ciment, d'eau chargée en sels, de bentonite, et de silicate de sodium.

L'eau chargée en sels est par exemple de l'eau de mer, de l'eau saumâtre, de l'eau séléniteuse.

Le ciment est avantageusement un ciment de type CEM III /A, B ou C, ou encore un mélange de laitier de haut fourneau et d'un agent activant, dans un rapport pondéral laitier/agent activant compris dans la gamme allant d'environ 60/40 à environ 90/10. L'agent activant est par exemple un agent activant basique tel que la soude, la potasse, le (bi)carbonate de sodium ou de potassium, le gypse, la chaux vive, la chaux éteinte ou un mélange de ces composés, ou bien encore du ciment Portland, ce dernier composé étant préféré. Le ciment de type CEM III, le laitier de haut fourneau et le ciment Portland susceptibles d'être utilisés dans le cadre de l'invention ont une finesse Blaine comprise dans la gamme allant d'environ 2 500 à environ 5 000 cm²/g.

Généralement, le coulis comprend environ 60 kg à environ 250 kg de ciment par m³ d'eau chargée en sels.

La bentonite, qui peut être une bentonite sodique utilisée de manière classique en Travaux Publics ou une bentonite calcique naturelle, est présente dans le coulis à raison d'environ 25 à environ 80 kg par m³ d'eau chargée en sels.

Le silicate de sodium doit avoir un rapport pondéral SiO₂/Na₂O compris dans la gamme allant d'environ 2,6 à environ 3,9. On utilise de préférence le silicate de sodium sous la forme d'une solution aqueuse, dont la teneur en matière sèche est comprise dans la gamme allant d'environ 20 % à environ 45 % en poids, à raison d'environ 5 à environ 50 l par m³ d'eau chargée en sels. Il est toutefois possible d'utiliser également du silicate de sodium atomisé en poudre à raison d'environ 2 à environ 20 kg par m³ d'eau chargée en sels.

Le coulis selon l'invention peut en outre être constitué d'un retardateur de type lignosulfonate ou gluconate, comme par exemple du gluconate de sodium. La quantité de retardateur est généralement comprise dans la gamme allant d'environ 0,5 à environ 5 % en poids, par rapport au poids du ciment.

Le coulis de l'invention présente au moins l'une des propriétés suivantes :
- une viscosité Marsh comprise dans la gamme allant de 35 à 45 s ;
- une résistance à 28 j comprise dans la gamme allant de 0,2 à 1,5 MPa ;
- une perméabilité comprise dans la gamme allant de 10⁻⁷ à 10⁻¹⁰ m/s.

Pour préparer le coulis conforme à l'invention, on disperse la bentonite dans l'eau chargée en sels. La bentonite perd ses propriétés en devenant calcique. La suspension réalisée ne développe pas de propriété colloïdale susceptible d'assurer la stabilité des grains de ciment. Du silicate de sodium est ensuite ajouté à cette suspension. L'ajout de silicate de sodium entraîne une permutation partielle de la bentonite sous forme sodique, ce qui lui permet de retrouver la quasi-totalité de ses propriétés colloïdales. Enfin, on ajoute le ciment. Après homogénéisation, le coulis possède une viscosité et un seuil de cisaillement qui permettent le maintien des grains de ciment en suspension. La combinaison du silicate de sodium et de la bentonite permet d'obtenir un coulis stable, pratiquement insensible à l'agitation causée par la perforation.

Un autre mode de préparation consiste à mélanger simultanément dans l'eau chargée en sels la bentonite avec le ciment puis d'ajouter le silicate de sodium en dernier. Le coulis obtenu est stable comme précédemment. Il peut être utilisé comme fluide de forage pour réaliser une paroi d'étanchéité.

Ce deuxième mode de préparation a l'avantage de supprimer les stockages intermédiaires de suspension de bentonite.

Dans l'une et l'autre méthode de préparation, les différentes étapes sont mises en oeuvre selon des techniques bien connues de l'homme du métier.

L'utilisation de silicate de sodium permet notamment de mettre en oeuvre indifféremment des bentonites sodiques ou calciques naturelles dans un coulis à base d'eau chargée en sels, sans en augmenter le dosage.

Ainsi, selon un autre aspect, l'invention concerne l'utilisation de silicate de sodium et de bentonite comme agent stabilisant pour la préparation d'un coulis à base d'eau chargée en sels et de ciment.

Le coulis de l'invention est utile pour construire une paroi étanche lorsqu'on ne dispose pas d'approvisionnement en eau douce avec des débits compatibles avec la consommation de coulis nécessaire à la réalisation de cette paroi. Ceci est particulièrement sensible dans les estuaires de fleuves tels que celui de la Seine ou de la Gironde où il n'y a pas de réseau d'eau susceptible de fournir un débit suffisant. La nappe phréatique dans ces estuaires est en général saumâtre ce qui rend ce type de travaux quasiment impossible à réaliser.

Le coulis de l'invention est également utile dans le cas où l'utilisation de l'eau destinée à la consommation humaine est interdite ou limitée pour les besoins industriels et où la nappe phréatique est saturée en gypse.

Le coulis de l'invention est également utile en bord de mer pour réaliser des travaux d'injection pour la consolidation des sols ou des coupures étanches destinées à réaliser des fouilles hors d'eau lorsque le fond de fouille est situé sous le niveau de la nappe phréatique.

L'invention est illustrée par les exemples ci-après. Dans ces exemples, les paramètres suivants sont mesurés :
* Viscosité Marsh : elle est mesurée à l'aide du cône de Marsh. C'est une mesure conforme aux normes API (American Petroleum Institute). Le mode opératoire consiste à remplir un entonnoir dont l'ajutage est parfaitement calibré et de mesurer l'écoulement de 946 ml de fluide. La viscosité s'exprime en secondes.
* Résistance : après 28 jours de conservation en milieu saturé, l'échantillon de coulis est soumis à un essai de compression simple à l'aide d'une presse de compression. A l'échéance de 28 jours, l'échantillon de coulis est démoulé, les faces sont rectifiées en s'assurant qu'elles sont parallèles. Cet échantillon est placé entre les plateaux de la presse et comprimé à la vitesse de 2 mm/min. On note la charge au moment de la rupture de l'échantillon. La résistance s'exprime en MPa.
* Perméabilité : l'échantillon est placé dans une cellule triaxiale entourée d'une membrane en caoutchouc. On applique une étreinte latérale sur l'échantillon et on fait percoler de l'eau au travers de l'échantillon à une pression deux fois moindre que celle de l'étreinte latérale. On mesure le volume d'eau qui passe au travers de l'échantillon en fonction du temps. En appliquant la loi de DARCY on déduit la perméabilité exprimée en m/s.
* Ressuée : ce paramètre caractérise la stabilité du coulis. Il s'agit de l'eau d'exsudation lorsque le coulis est au repos. Cette ressuée est mesurée à l'aide d'une éprouvette graduée d'un litre. On remplit l'éprouvette de un litre de coulis et, après trois heures de repos, on mesure l'eau qui surnage à la surface du coulis. La ressuée est égale au rapport du volume d'eau surnageant sur le volume total de coulis avant exsudation.

### Exemple 1 : Préparation d'un coulis

Dans 1000 l d'eau de mer, on ajoute 40 kg de bentonite sodique (réf. CV15, commercialisée par SFBD). La viscosité de cette suspension est identique à celle de l'eau.
A cette suspension on ajoute 35 l d'une solution aqueuse de silicate de sodium (teneur en matière sèche = 32% en poids), de rapport pondéral SiO_{2/}Na₂O égal à 3,3 (réf. 7N34, commercialisée par Rhône Poulenc) ; la viscosité Marsh de la suspension atteint 35 s.
On ajoute enfin 120 kg de ciment de type CEM III/C 32.5 (commercialisé par HOLCIM) ; la viscosité Marsh du mélange est alors égale à 37 s.
Ce coulis a une ressuée inférieure à 3 % ; son temps de maniabilité est de 3 heures ; sa résistance à 28 jours est égale à 0,5 MPa ; et sa perméabilité est égale à 5 10⁻⁹ m/s.

### Exemple 2 : Préparation d'un coulis

On répète le mode opératoire de l'exemple 1, mais en utilisant 50 kg de bentonite. La viscosité Marsh du coulis est égale à 39 s.
La ressuée de ce coulis est inférieure à 3% ; son temps de maniabilité est de 3 heures ; sa résistance est égale à 0,5 MPa ; et sa perméabilité est de 6 10⁻⁹ m/s.

Ces deux exemples montrent que la viscosité augmente avec la concentration en bentonite malgré la présence d'eau de mer, ce qui met en évidence la restauration d'une partie des propriétés colloïdales de la bentonite.

### Exemple 3 : Préparation d'un coulis

On répète le mode opératoire de l'exemple 2, mais en ajoutant 3 l d'un retardateur de type lignosulfonate (réf. C6 FF, commercialisé par SFBD).
Le temps de maniabilité du coulis est prolongé jusqu'à 12 heures ; sa ressuée reste inférieure à 5 %. Les autres caractéristiques sont inchangées.

### Exemple 4 : Préparation d'un coulis

Dans 1000 l d'eau de mer, on ajoute 40 kg de bentonite sodique (réf. FTP3, commercialisée par CECA). La viscosité de cette suspension est identique à celle de l'eau.
On ajoute à cette suspension 40 l d'une solution aqueuse de silicate de sodium (teneur en matière sèche = 32%), de rapport pondéral SiO₂/Na₂O égal à 3,3 (réf. 7N34, commercialisée par Rhône Poulenc) ; la viscosité Marsh de la suspension atteint 36 s.
On ajoute à cette suspension 96 kg de laitier de haut fourneau (finesse Blaine = 4 500 cm²/g, commercialisé par LES MOULINS DU LITTORAL) et 24 kg de ciment Portland de type CEM II/A 32.5 (commercialisé par LAFARGE) ; la viscosité Marsh du coulis est alors égale à 39 s.
Le temps de maniabilité du coulis est égal à 6 heures ; sa ressuée est inférieure à 5 % ; sa résistance à 28 jours est égale à 0,7 MPa ; et sa perméabilité est égale à 3 10⁻⁹ m/s.

L'utilisation de laitier de haut fourneau activé permet d'augmenter le temps de maniabilité.

### Exemple 5 : Préparation d'un coulis

On répète le mode opératoire de l'exemple 4, mais en remplaçant la bentonite sodique par une bentonite calcique (réf. FVO, commercialisée par SFBD) et exempte d'addition de polymères. Les résultats obtenus sont identiques à ceux de l'exemple 4.

L'utilisation d'une bentonite calcique naturelle est donc possible grâce à l'addition de silicate de sodium.

### Exemple 6 : Préparation d'un coulis

On réalise un coulis en mélangeant dans 1000 l d'eau de mer 40 kg de bentonite calcique naturelle (réf. FZO, commercialisée par SFBD) et 120 kg d'un mélange constitué par 96 kg de laitier de haut fourneau (finesse Blaine = 4 500 cm²/g, commercialisé par LES MOULINS DU LITTORAL) et 24 kg de ciment Portland de type CEM II/A 32.5 (commercialisé par LAFARGE). La viscosité d'un tel mélange est voisine de celle de l'eau.
On ajoute à cette suspension 40 l d'une solution aqueuse de silicate de sodium (teneur en matière sèche = 32%), de rapport pondéral SiO_{2/}Na₂O égal à 3,3 (réf. 7N34, commercialisée par Rhône Poulenc) ; la viscosité Marsh de la suspension atteint 39 s.
Le temps de maniabilité du coulis est de 4 heures ; sa ressuée est inférieure à 5 % ; sa résistance à 28 jours est égale à 0,8 MPa ; et sa perméabilité est égale à 4 10⁻⁹ m/s.

Les propriétés de ces coulis permettent la réalisation de parois d'étanchéité. La quantité de bentonite utilisée reste compatible avec la méthode de perforation directe au coulis, et n'est pas augmentée malgré la présence d'eau de mer.

## Revendications

1. Coulis stable constitué de ciment, d'eau chargée en sels, de bentonite, et de silicate de sodium.

2. Coulis selon la revendication 1, dans lequel le ciment est un ciment CEM III /A, B ou C, ou un mélange de laitier de haut fourneau et d'un agent activant, dans un rapport pondéral laitier/agent activant compris dans la gamme allant d'environ 60/40 à environ 90/10.

3. Coulis selon la revendication 2, dans lequel le ciment est un mélange de laitier de haut fourneau et de ciment Portland.

4. Coulis selon l'une des revendications 1 à 3, qui comprend environ 60 kg à environ 250 kg de ciment par m³ d'eau chargée en sels.

5. Coulis selon l'une des revendications 1 à 4, dans lequel la bentonite est une bentonite sodique ou une bentonite naturelle.

6. Coulis selon l'une des revendications 1 à 5, qui comprend environ 25 à environ 80 kg de bentonite par m³ d'eau chargée en sels.

7. Coulis selon l'une des revendications 1 à 6, dans lequel le silicate de sodium a rapport pondéral SiO₂/Na₂O compris dans la gamme allant d'environ 2,6 à environ 3,9.

8. Coulis selon l'une des revendications 1 à 7, dans lequel le silicate de sodium est sous la forme d'une solution aqueuse dont la teneur en matière sèche est comprise entre environ 20% et environ 45% en poids, et est présent dans le coulis à raison d'environ 5 à environ 50 l par m³ d'eau chargée en sels.

9. Coulis selon l'une des revendications 1 à 8, dans lequel le ciment est un ciment CEM III /A, B ou C, qui est en outre constitué d'un retardateur de type lignosulfonate ou gluconate.

10. Coulis selon la revendication 9, qui comprend environ 0,5 à environ 5 % en poids de retardateur, par rapport au poids du ciment.

11. Coulis selon l'une des revendications 1 à 10, qui possède une viscosité Marsh comprise dans la gamme allant d'environ 35 à environ 45 s.

12. Utilisation conjointe de silicate de sodium et de bentonite comme agent stabilisant pour la préparation d'un coulis à base d'eau chargée en sels et de ciment.
